# EUROPEAN PATENT APPLICATION

(11) **EP 4 641 025 A1**
(43) Date of publication of application: **29.10.2025**
(21) Application number: 23905829.0
(22) Date of filing: 15.12.2023
(51) Int. Cl.: F04D 29/64, F04D 25/08, F21V 33/00, F21V 21/112

(54) **HOISTING STRUCTURE AND FAN LAMP**

(30) Priority: 19.12.2022 CN 202223394117 U
(71) Applicant: Suzhou Opple Lighting Co., Ltd., Suzhou, Jiangsu 215211 (CN); Opple Lighting Co., Ltd., Shanghai 201201 (CN)
(72) Inventor: WANG, Yaohai, Suzhou, Jiangsu 215211 (CN); WANG, Xiaolei, Suzhou, Jiangsu 215211 (CN); WU, Xiangang, Suzhou, Jiangsu 215211 (CN)
(74) Representative: Winter, Brandl - Partnerschaft mbB
(86) International application number: PCT/CN2023/139120
(87) International publication number: WO 2024/131665

(57) **Abstract**

A hoisting structure and a fan lamp. The fan lamp comprises: a mounting bracket (10) and a hanging rod (20), wherein the mounting bracket (10) is configured to be mounted on a mounting surface; the upper end of the hanging rod (20) is provided with a fixing portion (22), which is configured to fit with the mounting bracket (10); the hanging rod (20) and the fixing portion (22) are integrally configured; the mounting bracket (10) is provided with a through hole for supporting the fixing portion (22); a limiting portion (222) is formed on an outer side wall of the fixing portion (22); the mounting bracket (10) is provided with a fitting portion (131) corresponding to the limiting portion (222); and the limiting portion (222) fits with the fitting portion (131), so as to prevent the hanging rod (20) from horizontally rotating relative to the mounting bracket (10). Compared with the prior art, the fan lamp is simple and reliable, and a pin does not need to be arranged on the hanging rod, thereby reducing assembly components, such that costs can be reduced.

## Description

The present application claims priority from Chinese Patent Application No. 202223394117.1, filed on December 19, 2022, titled with "HOISTING STRUCTURE AND FAN LAMP", the disclosure of which is incorporated herein by reference in its entirety as part of the present application.

### TECHNICAL FIELD

The present application relates to a hoisting structure and a fan lamp, belonging to a field of the fan lamp.

### BACKGROUND

Existing fan lamps are generally hoisted on the ceiling through a hoisting structure, and the main body of the fan lamp is connected to the mounting bracket installed on the ceiling through the hanger rod, and the hanger rod and the mounting bracket are generally fixed by the hemispherical component, which is usually the alloy die casting, and the hanger rod and the hemispherical component are locked using pins and screws. However, this installation method has many assembly parts, is relatively complex, and is relatively costly.

In view of this, it is indeed necessary to propose a hoisting structure and a fan lamp to solve the above problems.

### SUMMARY

The object of the present application is to provide a hoisting structure and a fan lamp that can reduce assembly parts.

In order to achieve the above object, the present application provides a hoisting structure, including a mounting bracket and a hanger rod, the mounting bracket is configured to be installed on an installation surface, an upper end of the hanger rod is provided with a fixing portion configured to cooperate with the mounting bracket, the hanger rod is integrally provided with the fixing portion, the mounting bracket is provided with a through hole configured to support the fixing portion, a limiting portion is formed on an outer sidewall of the fixing portion, the mounting bracket is provided with a cooperating portion corresponding to the limiting portion, and the limiting portion is configured to cooperate with the cooperating portion to prevent the hanger rod from rotating relative to the mounting bracket in a horizontal direction.

Optionally, a supporting member is further arranged in the mounting bracket and fixedly connected to the mounting bracket, and the supporting member is arranged around an edge of the through hole, and the cooperating portion is formed on the supporting member.

Optionally, the limiting portion is formed by protruding outward from the outer sidewall of the fixing portion, and the cooperating portion is formed by partially recessing the supporting member.

Optionally, a side of the through hole is provided with an opening for the limiting portion to pass through in a vertical direction, and a diameter of the through hole is smaller than a maximum diameter of the fixing portion on a horizontal plane.

Optionally, the supporting member is detachably connected to the mounting bracket, and the supporting member is connected to the mounting bracket through a fastener, and the cooperating portion is located at an end of the supporting member away from the opening.

Optionally, the limiting portion is formed by recessing inward from the outer sidewall of the fixing portion, and the cooperating portion is formed by partial protruding of the supporting member.

Optionally, the limiting portion is in a shape of a groove or a notch.

Optionally, the fixing portion is in a shape of a sphere.

Optionally, the fixing portion has a hollow structure, and an inner side of the fixing portion is provided with a reinforcing rib protruding outward or recessed inward.

In order to achieve the above object, the present application further provides a fan lamp, which includes a main body and the above-mentioned hoisting structure, wherein a light source module is arranged in the main body, and the main body is connected to the hanger rod and the main body is provided with a fan blade.

The beneficial effects of the present application are: the present application is simple and reliable, there is no need to arrange a pin on the hanger rod, which reduces assembly parts and can reduce costs.

### BRIEF DESCRIPTION OF DRAWINGS

Fig. 1 is a schematic structural diagram of a hoisting structure of the present application.
Fig. 2 is a schematic structural diagram of a hoisting structure of the present application from another perspective.
Fig. 3 is an exploded structural schematic diagram of a hoisting structure of the present application.
Fig. 4 is a schematic structural diagram of an embodiment of a detachable supporting member in a hoisting structure of the present application.
Fig. 5 is a schematic structural diagram of another embodiment of a limiting portion and a cooperating portion of a hoisting structure of the present application.
Fig. 6 is a schematic structural diagram of another embodiment of a limiting portion and a cooperating portion of a hoisting structure of the present application.
Fig. 7 is a schematic structural diagram of an embodiment in which a cooperating portion of a hoisting structure of the present application is a solder joint.
Fig. 8 is a schematic structural diagram of an embodiment in which a limiting portion of a hoisting structure of the present application is a chute.
Fig. 9 is a schematic structural diagram of an embodiment in which a limiting portion of a hoisting structure of the present application is a notch.
Fig. 10 is a schematic structural diagram of another embodiment of a hanger rod of a hoisting structure of the present application.
Fig. 11 is a schematic structural diagram of another embodiment of a hanger rod of a hoisting structure of the present application.
Fig. 12 is a schematic structural diagram of a detachable hanger rod of a hoisting structure of the present application.
Fig. 13 is a schematic structural diagram of a fixing portion provided with vertical reinforcing ribs in a hoisting structure of the present application.
Fig. 14 is a schematic structural diagram of a fixing portion provided with horizontal reinforcing ribs in a hoisting structure of the present application.
Fig. 15 is a schematic structural diagram in which a fixing portion of a hoisting structure of the present application is solid.

### DETAILED DESCRIPTION

In order to make objectives, technical solutions and advantages of the present application clearer, the present application will be described in detail below with reference to the accompanying drawings and specific embodiments.

Here, it should be noted that, in order to avoid obscuring the present application with unnecessary details, only the structures and/or processing steps closely related to the solution of the present application are illustrated by the drawings, while other details that are not related to the present application are omitted.

In addition, it should also be noted that the terms "includes," "comprises," or any other variation thereof are intended to cover a non-exclusive inclusion, such that a process, method, article or device that includes a list of elements includes not only the above elements, but also other elements not expressly listed or inherent to such process, method, article or device are further included.

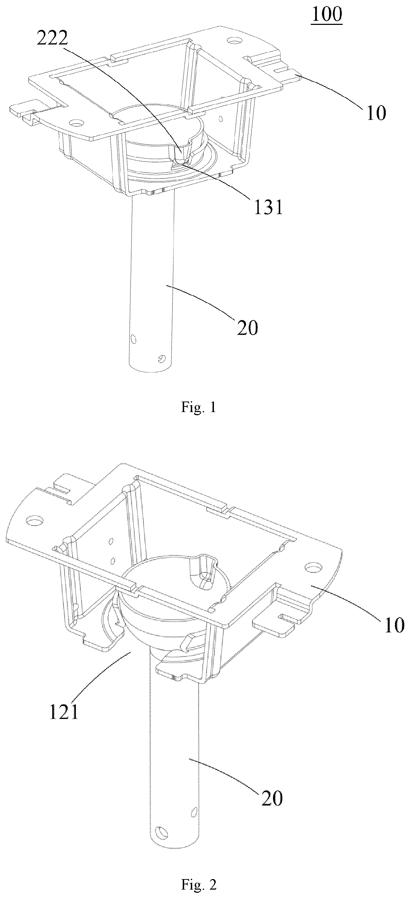

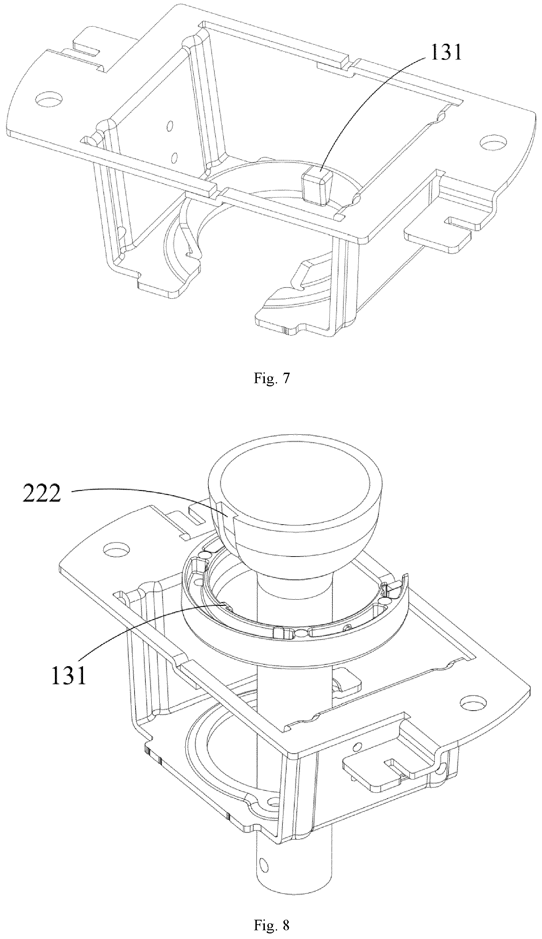

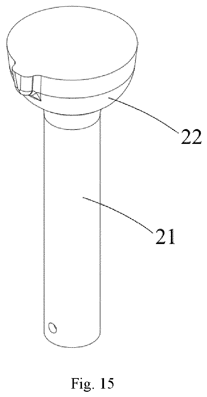

As illustrated by Figs. 1 to 15, the present application discloses a fan lamp, which is a combination of a fan and a light fixture. The fan lamp includes a main body and a hoisting structure 100, the hoisting structure 100 is fixed on an installation surface such as a ceiling, and the main body is connected to the hoisting structure 100 and located below the hoisting structure 100. A light source module is arranged in the main body, and a fan blade is arranged on the main body, and the fan blade can rotate relative to the main body and generate a top-to-bottom airflow along a light-exiting direction of the light source module. For clarity of description, the following description will take the fan lamp as an example in detail.

As illustrated by Figs. 1 to 3, specifically, the hoisting structure 100 includes a mounting bracket 10 and a hanger rod 20, the hanger rod 20 is used to connect the main body and the mounting bracket 10, and the mounting bracket 10 is provided with a screw hole 11, an expansion bolt is arranged in the screw hole 11 to fix the mounting bracket 10 on the ceiling, and a plurality of screw holes 11 are provided and are respectively located at two sides of the mounting bracket 10.

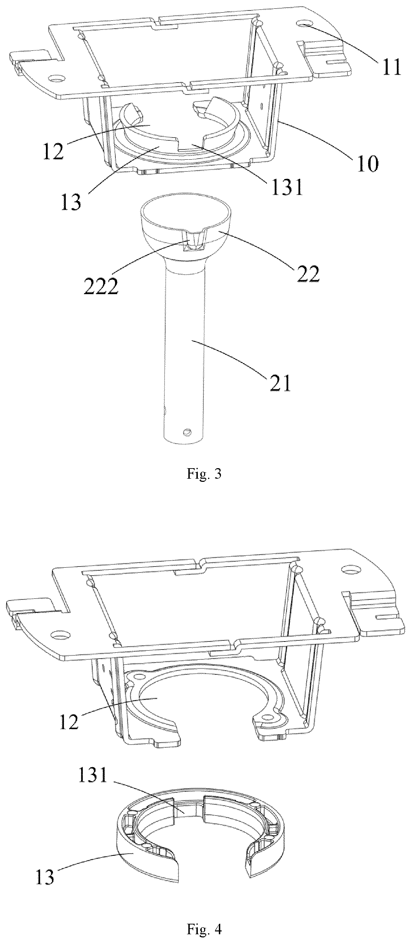

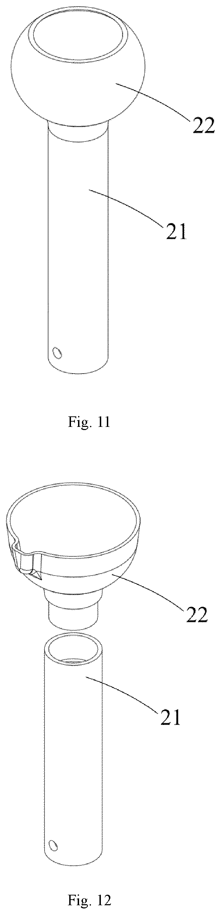

As illustrated by Fig. 3 and Fig. 12, the hanger rod 20 includes a rod body 21 and a fixing portion 22 located at an upper end of the rod body 21, the rod body 21 is used to connect the main body, and the fixing portion 22 is arranged in the mounting bracket 10 and fixed with the mounting bracket 10. Preferably, the rod body 21 and the fixing portion 22 each include a hollow structure, and the fixing portion 22 is provided with an outlet hole for connecting to commercial power, and a bottom of the rod body 21 is further provided with a pin hole for connecting to the main body. It should be noted that the fixing portion 22 and the rod body 21 are integrally formed. With this arrangement, the rod body 21 is not easily separated from the fixing portion 22 and it is convenient to install and disassemble. Of course, the fixing portion 22 and the rod body 21 can be fitted and fixed by other means that include but are not limited to welding, riveting, interference pressing, screw locking. Specifically, it can be set as needed and is not limited here.

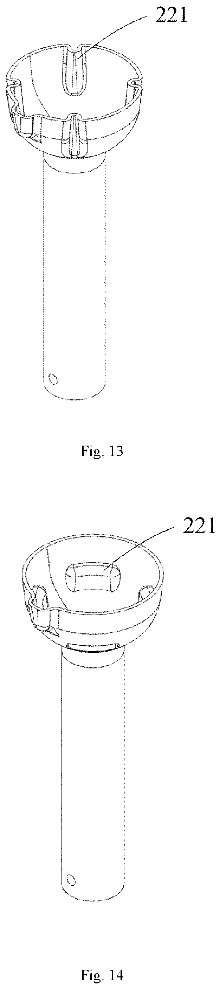

As illustrated by Figs. 13 and 14, in other embodiments of the present application, a reinforcing rib 221 that protrudes outward or is recessed inward is arranged inside the fixing portion 22, and the reinforcing rib 221 can extend horizontally or vertically to prevent the fixing portion 22 from deforming.

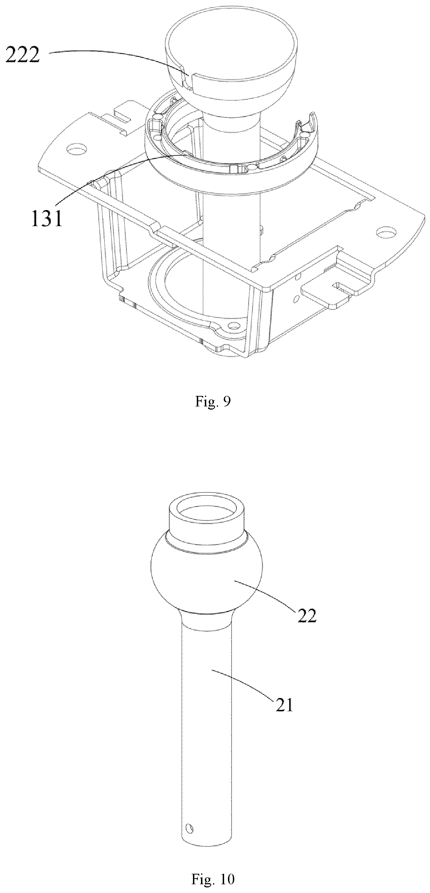

As illustrated by Fig. 10, Fig. 11 and Fig. 15, of course, the fixing portion 22 may also include a solid structure, and the fixing portion 22 may be in a shape of a hemisphere or whole sphere.

As preferred embodiments of the present application, the mounting bracket 10 is provided with a through hole 12 for supporting the fixing portion 22, and a diameter of the through hole 12 is smaller than a maximum diameter of the fixing portion 22 on a horizontal plane. A limiting portion 222 is formed on an outer sidewall of the fixing portion 22, and the mounting bracket 10 is provided with a cooperating portion 131 corresponding to the limiting portion 222, and the hanger rod 20 can be installed in a vertical direction to the through hole 12 and can move freely in the vertical direction. In a horizontal direction, the limiting portion 222 can prevent the hanger rod 20 from rotating relative to the mounting bracket by limiting cooperate with the cooperating portion 131, that is, when the main body drives the fan blade to rotate, the hanger rod 20 can remain relatively fixed in the horizontal direction.

As illustrated by Fig. 4, further, a supporting member 13 is further arranged in the mounting bracket 10 and fixedly connected to the mounting bracket 10, and the supporting member 13 is arranged around an edge of the through hole 12, and the cooperating portion 131 is formed on the supporting member 13. It can be understood that the supporting member 13 may be a flange formed from an edge of the through hole 12, and the flange extends upward for supporting the fixing portion 22. Moreover, since the main body and the hanger rod 20 have a certain weight, the supporting member 13 may deform under the action of gravity for a long time, so the structure of the supporting member 13 can be strengthened, for example, the supporting member 13 can be detachably connected to the mounting bracket 10, and the supporting member 13 is fixed to the mounting bracket 10 through a fastener such as a bolt, so that the supporting member 13 can be reinforced by providing a rib to prevent deformation.

The limiting portion 222 may be formed by protruding outward from the outer sidewall of the fixing portion 22, and the cooperating portion 131 may be formed by partially recessing the supporting member 13, and the limiting portion 222 and the cooperating portion 131 can prevent the fixing portion 22 from rotating relative to the mounting bracket 10 through concave-convex fit. Of course, in other embodiments of the present application, the limiting portion 222 may also be formed by recessing inward from the outer sidewall of the fixing portion 22, and the cooperating portion 131 may also be formed by partial protruding of the supporting member 13, the specific settings can be made according to the needs, , and are not limited thereto.

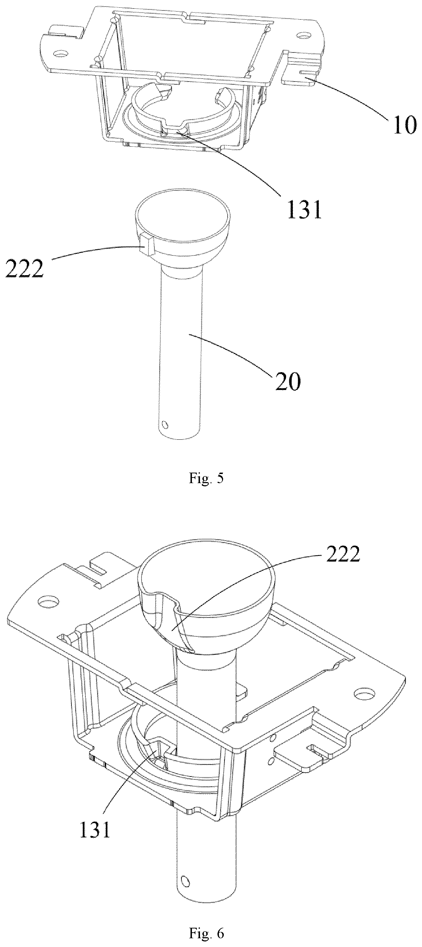

As illustrated by Fig. 5, taking as an example the arrangement where the limiting portion 222 is recessed and the cooperating portion 131 is protruded, the limiting portion 222 can be a convex rib formed by stamping or the like, and the supporting member 13 is partially recessed at a position corresponding to the limiting portion 222 to accommodate the limiting portion 222. In other embodiments of the present application, the limiting portion 222 may also be fixed on the outer sidewall of the fixing portion 22 by welding or attachment, etc.

In addition, a side of the through hole 12 is provided with an opening 121 for the limiting portion 222 to pass through in the vertical direction, and the cooperating portion 131 is located at an end of the supporting member 13 away from the opening 121, and the hanger rod 20 can make the limiting portion 222 pass through the opening 121 from below the mounting bracket 10 to extend the fixing portion 22 into the mounting bracket 10, and then rotate the limiting portion 222 to align with the cooperating portion 131. Under the action of gravity, the hanger rod 20 is equivalent to self-locking with the supporting member 13. When disassembly is required, it is only necessary to separate the limiting portion 222 and the cooperating portion 131 in the vertical direction and rotate to the opening 121, so as to be separated.

As illustrated by Figs. 6 to 9, in other embodiments, taking as an example the arrangement where the limiting portion 222 is recessed and the cooperating portion 131 is protruded, the limiting portion 222 includes but is not limited to a groove shape or notch shape, as long as it can achieve the positional restraint between the limiting portion 222 and the cooperating portion 131.

To sum up, the present application is simple and reliable, and there is no need to arrange a pin on the hanger rod 20, which reduces assembly parts and can reduce costs.

The above embodiments are only used to illustrate the technical solutions of the present application and are not limiting. Although the present application has been described in detail with reference to preferred embodiments, those of ordinary skill in the art should understand that the technical solutions of the present application can be modified or equivalently replaced, without departing from the spirit and scope of the technical solution of the present application.

## Claims

1. A hoisting structure, wherein comprises a mounting bracket (10) and a hanger rod (20), the mounting bracket (10) is configured to be installed on an installation surface, an upper end of the hanger rod (20) is provided with a fixing portion (22) configured to cooperate with the mounting bracket (10), and the hanger rod (20) is integrally arranged with the fixing portion (22), the mounting bracket (10) is provided with a through hole (12) configured to support the fixing portion (22), a limiting portion (222) is formed on an outer sidewall of the fixing portion (22), and the mounting bracket (10) is provided with a cooperating portion (131) corresponding to the limiting portion (222), the limiting portion (222) is configured to cooperate with the cooperating portion (131) to prevent the hanger rod (20) from rotating relative to the mounting bracket (10) in a horizontal direction.

2. The hoisting structure according to claim 1, wherein a supporting member (13) is further arranged in the mounting bracket (10) and fixedly connected to the mounting bracket (10), and the supporting member (13) is arranged around an edge of the through hole (12), and the cooperating portion (131) is formed on the supporting member (13).

3. The hoisting structure according to claim 2, wherein the limiting portion (222) is formed by protruding outward from the outer sidewall of the fixing portion (22), and the cooperating portion (131) is formed by partially recessing the supporting member (13).

4. The hoisting structure according to claim 3, wherein a side of the through hole (12) is provided with an opening (121) for the limiting portion (222) to pass through in a vertical direction, and a diameter of the through hole (12) is smaller than a maximum diameter of the fixing portion (22) on a horizontal plane.

5. The hoisting structure according to claim 4, wherein the supporting member (13) is detachably connected to the mounting bracket (10), and the supporting member (13) is connected to the mounting bracket (10) through a fastener, and the cooperating portion (131) is located at an end of the supporting member (13) away from the opening (121).

6. The hoisting structure according to claim 2, wherein the limiting portion (222) is formed by recessing inward from the outer sidewall of the fixing portion (22), and the cooperating portion (131) is formed by partial protruding of the supporting member (13).

7. The hoisting structure according to claim 6, wherein the limiting portion (222) is in a shape of a groove or a notch.

8. The hoisting structure according to claim 1, wherein the fixing portion (22) is in a shape of a sphere.

9. The hoisting structure according to claim 1, wherein the fixing portion (22) has a hollow structure, and an inner side of the fixing portion (22) is provided with a reinforcing rib (221) protruding outward or recessed inward.

10. A fan lamp, wherein comprises a main body and the hoisting structure according to any one of claims 1-9, a light source module is arranged in the main body, and the main body is connected to the hanger rod (20) and the main body is provided with a fan blade.
